# EUROPEAN PATENT SPECIFICATION

(11) **EP 4 403 714 B1**
(45) Date of publication and mention of the grant of the patent: **27.11.2024**
(21) Application number: 23152040.4
(22) Date of filing: 17.01.2023
(51) Int. Cl.: E03F 5/04, B01D 29/35

(54) **PAVEMENT DRAINAGE WELL AND INFILTRATION SYSTEM**
STRASSENENTWÄSSERUNGSSCHACHT UND INFILTRATIONSSYSTEM
PUITS DE DRAINAGE DE CHAUSSÉE ET SYSTÈME D'INFILTRATION

(43) Date of publication of application: 24.07.2024
(73) Proprietor: TBS-SVA Groep B.V., 6031 MZ Nederweert (NL); WISY AG Haustechniksysteme, Filtertechnik, 63699 Kefenrod (DE)
(72) Inventor: Theunissen, Jack Elisabeth Marie, 6031 MZ Nederweert (NL); Korten, Frank Cornelis Elisabeth, 6031 MZ Nederweert (NL); Denk, Arnold, 63699 Kefenrod-Hitzkirchen (DE); Maurer, Jan, 63699 Kefenrod-Hitzkirchen (DE); Ahlers, Paul Sebastian, 63699 Kefenrod-Hitzkirchen (DE)
(74) Representative: Arnold & Siedsma

(56) References cited:
- DE-U1- 29 502 895
- KR-B1- 101 936 331
- US-A1- 2017 088 437

## Description

The present disclosure relates to a pavement drainage well for draining surface water from a paved surface, and pavement surface water infiltration system employing such drainage well.

Pavements, which are also referred to as road surfaces, are paved surfaces that are intended for vehicular and foot traffic. Pavements include, for instance, roads, sidewalks, walkways, bridges, bicycle lanes, squares, plazas, parking lots, et cetera. These are generally provided on the ground, which provides the base on which such pavements are placed. Paved surfaces can for instance be surfaces that are provided with asphalt, stone tiles, concrete, rubber, or other hardened and/or durable surface materials. Generally, such materials provide a suitable, solid and durable base for transportation (e.g., walking or driving), but are less suitable for draining water (e.g., from precipitation such as rain or snow) and other waste products (e.g., dust, leaf litter, debris, et cetera). Accordingly, pavements are generally provided with drainage systems, which may include storm drains and/or drainage wells that are connected to bodies of water (such as lakes or rivers), reservoirs, and/or a sewage system. Such drainage systems can prevent flooding of pavements, and can assist in clearing the pavements of waste products. Drainage systems have to be maintained periodically to clear debris from their internal (overflow) reservoirs and to clear inlet grates and such. Furthermore, whilst drainage systems are essential for preventing flooding in populated areas, they may prevent water from reaching the soil, which would normally contribute to the water table (e.g., ground water), which may prevent soil erosion and may contribute to vegetation and crop growth, or the like.

Publication DE 295 02 895.5 U1 discloses a rainwater filter device in which a storage area for filtered water is fluidly connected to a drain area for unfiltered water via an overflow edge Publication US 2017/0088437 A1 discloses an apparatus to classify and separate turbid water and clean water as well as a filtering device which may be used together with said apparatus. A turbid rainwater flow enters the filtering device via a rainwater inlet and passes through a filter assembly comprising first, second and third filter elements which may be tubular in shape. A tilting calibrator is provided in an upper part of the second filter element and is pivotally connected to an end of a rod. The other end of the rod is pivotally connected to an upper part of the filtering device. The assembly formed by the tilting calibrator, the rod and the first, second and third filter elements is designed to adapt to the flow rate of rainwater according to its calibration. This assembly has multiple moveable components.

Publication KR 10-1936331 A discloses a vortex type sewage treatment apparatus having a hopper-shape screen chamber provided inside a trough. An upper inflow pipe is connected to an upper hollow section of the trough to introduce rainwater comprising contaminants. A pollutant discharge pipe is provided at a lower hollow section of the through. A storm drain pipe communicating with a sewer for cleaned water is also provided at the upper hollow section of the through.

It is an object of the present disclosure, amongst other objects, to alleviate the aforementioned drawbacks of the drainage systems according to the state of the art.

Accordingly, the present disclosure provides a pavement drainage well for draining surface water, comprising a well housing with a surface water inlet configured to receive surface water from a paved surface, and a wastewater outlet configured to be connected to a sewer or other water body or reservoir, a filter unit located within the well housing between the surface water inlet and the wastewater outlet, the filter unit comprising a filter element forming at least part of a flow surface along which the surface water flows from the surface water inlet to the wastewater outlet, and a filtrate outlet configured to drain the filtrate collected by the filter unit from the drainage well.

By providing the filter unit between the inlet and the outlet of the drainage well, filtered water can be collected (i.e., the filtrate collected by the filter unit) which can subsequently be provided to the water table of the surrounding area, for instance via an infiltration reservoir or the like, or can be provided to agricultural processes or the like. Advantageously, the present drainage well has a low maintenance requirement because it is (a part of) the flow surface along which the surface water flows from the surface water inlet to the wastewater outlet of the well. A part of the surface water thereby cleans the exterior surface of the filter element, which makes the filter unit essentially self-cleaning. The present drainage well provides a significant amount of useful filtered water. Only a relatively small fraction of the surface water will be drained through the wastewater outlet, for instance to a sewer, together with further debris and contaminants in the water that did not pass the filter (i.e., the residue). Accordingly, the present drainage well has a positive effect on the environment by providing filtered water, and requires less maintenance as compared to drainage systems and/or associated filters according to the state of the art.

In particular, the flow surface is configured to guide the surface water from the surface water inlet to pass along and over the filter element towards the wastewater outlet. The flow surface is continuous from the surface water inlet to the wastewater outlet. The filter element forms at least part of such continuous flow surface over which the surface water flows from the surface water inlet to the wastewater outlet. The flow surface defines a continuous drainage channel from the surface water inlet to the wastewater outlet, the filter element forming at least a part of this continuous drainage channel while leaving free the continuous channel. In other words, the filter element may form a wall section of such continuous drainage channel.

The well housing may be an elongate housing, preferably rectangular, that is provided underground at a level below the paved surface. The housing is generally made of concrete, preferably reinforced concrete. The surface water inlet is provided at a location higher than the wastewater outlet, such that the transport of the surface water past the filter and to the outlet is provided by gravity. One or more storm drains can be connected to the drainage well, and/or a storm drain can be integrated with the drainage well. Preferably, the filter unit and/or the filter element are removably mounted in the well, so as to be replaceable. An access hatch, or the like, of the well housing is preferably sized to accommodate the removal of the filter unit and/or filter element. The filter element forms a channel arranged between the surface water inlet to the wastewater outlet. The channel may extend from the surface water inlet to the wastewater outlet. The channel may have a (partially or fully) cylindrical cross-section. Preferably, the channel narrows towards the wastewater outlet. The channel may have a frustoconical shape or a funnel shape. The channel has an inlet side and an outlet side, wherein the inlet side is closer to the surface water inlet than the wastewater outlet, and the outlet side is closer to the wastewater outlet than the surface water inlet. The inlet side may be flush with (part of) an interior wall of the well housing. The outlet side may be flush with (part of) the wastewater outlet.

The surface water inlet is oriented relative to the channel such that at least part of the surface water is guided to follow a substantially helical path through the channel. To that effect, the inlet may for instance direct the surface water perpendicularly to a central axis of the channel, and at a distance therefrom (i.e., in a tangential direction relative to the central axis), so as to provide the water with a swirl or rotation with respect to the channel. Accordingly, the filter element of the filter unit can function as a cyclone filter, wherein the centrifugal force acting upon the water aids in the water passing through the filter. The rotating path of the water along the filter element also increases the effective filter surface of the filter element, as the water tends to pass a large portion of the filter element.

Further preferably, the filter element comprises a filter plate with a filter mesh, preferably wherein the filter plate is made of stainless steel. Preferably, the filter mesh has a mesh size (i.e., pore size) of approximately between 50 µm to 500 µm. A more preferable mesh size is in the range of 100 µm to 300 µm, most preferably 100 µm to 280 µm. The mesh size may vary over the surface of the filter mesh, such that at one location on the filter mesh the mesh size differs from the mesh size at another location on the filter mesh.

Further preferably, the filter element comprises an adhesion plate provided behind the filter plate. A distance between the filter plate and the adhesion plate may decrease towards the surface water inlet. The adhesion plate may be perforated. Preferably, in a cross-section along the longitudinal direction of the filter element, the filter plate and the adhesion plate define an angle with respect to each other. The adhesion plate is preferably located closer to the filter plate at the inlet side of the filter element than at the outlet side of the filter element. When the water has passed through the filter plate, it tends to adhere to the adhesion plate. As the adhesion plate moves away from the filter plate towards the wastewater outlet, the water present on the adhesion plate tends to "pull" water through the filter plate due to cohesive attraction. Perforations in the adhesion plate may allow for a higher throughput.

Further preferably, the well housing is at least partially made of concrete. The concrete may be reinforced concrete. The filter unit may be mounted to the concrete material of the well housing, preferably by partially casting the filter unit, or particularly mounting brackets thereof, into the concrete material. Accordingly, a flush transition can be made between the inner wall of the well housing and the outer surface (i.e., filter surface) of the filter element of the filter unit. Alternatively or additionally, the filter unit may be cast into concrete to form the well housing around a prefabricated filter unit.

Preferably, the drainage well further comprises an overflow reservoir located between the surface water inlet and the filter unit, wherein an overflow outlet of the overflow reservoir provides the surface water to the filter unit. The overflow reservoir may be formed by a storm drain or the like, or a perforated basket placed under the inlet of the drainage well.

Further preferably, the surface water inlet is provided with an inlet cover, preferably made of metal. The inlet cover may for instance be an inlet grate or a manhole cover. The inlet cover prevents large items, persons and animals from entering the drainage well unintentionally.

Preferably, the drainage well further comprises a prefilter located between the surface water inlet and the filter unit. The prefilter may for instance be a filter grate through which the surface water passes, or a perforated basket or the like. The prefilter may be removable, for instance through an access hatch (e.g., manhole cover) to be periodically cleaned.

The present disclosure also relates to a filter unit according to the above, which is sized to be installed in existing drainage wells. Accordingly, the present disclosure provides a filter unit configured to be installed within a well housing of a drainage well, between a surface water inlet and a wastewater outlet of the well, wherein the filter unit comprises a filter element configured to form at least part of a flow surface along which surface water (taken in by the well) flows from the surface water inlet to the wastewater outlet, and wherein the filter unit is configured to be connected to a filtrate outlet that is configured to drain the filtrate collected by the filter unit from the drainage well.

According to a second aspect of the present disclosure, a pavement surface water infiltration system is provided. The system comprises a pavement drainage well according to any of the preceding embodiments, and an infiltration reservoir connected to the filtrate outlet for receiving the filtrate from the filter unit. Hence, the system making use of the drainage well of the present disclosure benefits the water table of the surrounding area without polluting it. A balanced water table (e.g., ground water level) can prevent subsidence of buildings in the vicinity, and may benefit the ecosystem, such as the vegetation in the area.

At least part of the infiltration reservoir may have an open structure. Preferably, the infiltration reservoir is lined with a porous material, such as geotextile or a mesh material or the like. Accordingly, the filtered water (i.e., the filtrate collected by the filter unit) can be provided to the surrounding soil at a controlled rate. The use of filtrate instead of direct surface runoff prevents blockage of the reservoir, such that the effective lifetime of the reservoir is significantly prolonged.

Preferably, the system further comprises a venting duct connected with the infiltration reservoir and the well housing, wherein an outlet of the venting duct at the well housing is located above the surface water inlet, such that surface water does not directly enter the venting duct.

According to a third aspect of the present disclosure, a method for providing infiltration in the vicinity of a paved surface is provided, comprising the steps of:
- providing a pavement surface water infiltration system according to any of the preceding embodiments of the second aspect of the present disclosure;
- burying the infiltration reservoir, for example at a location in need of increased infiltration in the vicinity of the paved surface;
- burying the pavement drainage well, for example in the vicinity of the paved surface;
- connecting the surface water inlet of the well to the paved surface; and
- connecting the infiltration reservoir to the filtrate outlet of the well.

Preferably, the system comprises the venting duct, and the method further comprises a step of connecting the venting duct to the infiltration reservoir and the well.

Preferably, the step of connecting the surface water inlet of the well to the paved surface comprises connecting the water inlet of the well to an existing storm drain of the paved surface.

Preferably, the paved surface is a pavement, such as a road, for pedestrian or vehicle traffic.

The step of burying the pavement drainage well may comprise burying the well under or adjacent to the paved surface.

Preferably, the step of burying the infiltration reservoir comprises burying the reservoir at a level lower than the filtrate outlet of the well.

The above method according to the third aspect, and the preferred embodiments thereof, are able to provide infiltration in environments that are in need of increased infiltration, such as urban environments and other built-up environments wherein precipitation may be prevented from sufficiently reaching the water table (e.g., seeping into the ground). For instance, in urban and built-up environments, barriers may exist that prevent the precipitation from reaching the soil beneath. These barriers are generally paved surfaces (e.g., roads, parking areas, footpaths, bicycle lanes, et cetera), or other structures (e.g., bridges, foundations, buildings, walls, et cetera). The present method thus benefits infiltration in such areas, thereby preventing damage to vegetation and buildings, and possibly the paved surface itself, due to lack of infiltration which may for instance cause subsidence or soil erosion.

The above will further be elucidated by illustrative examples according to the figures, wherein:
FIG. 1 shows an exterior view of a pavement drainage well;
FIGS. 2 and 3 show cross-sectional views of the pavement drainage well of FIG. 1;
FIGS. 4A and 4B illustrate the working principle of the pavement drainage well of FIG. 1;
FIGS. 5A and 5B schematically illustrate the working principle of a filter element comprising a filter mesh and an adhesion plate;
FIG. 6 shows a pavement drainage well with integrated storm drain;
FIG. 7 shows a cross-sectional view of the pavement drainage well of FIG. 6;
FIG. 8 shows another pavement drainage well; and
FIG. 9 shows a pavement surface water infiltration system.

The following reference numbers are used throughout:
- 1: pavement drainage well
- 2: surface water
- 3: well housing
- 4: surface water inlet
- 5: paved surface
- 6: wastewater outlet
- 7: sewer
- 8: filter unit
- 9: filter element
- 10: flow surface
- 11: filtrate outlet
- 12: filtrate
- 13: access hatch
- 14: openings
- 15: storm drain
- 16: channel
- 17: helical path
- 18: filter plate
- 19: filter mesh
- 20: adhesion plate
- 21: distance
- 22: perforation
- 23: overflow reservoir
- 24: prefilter
- 25: overflow outlet
- 26: pavement surface water infiltration system
- 27: infiltration reservoir
- 28: open structure
- 29: soil
- 30: porous material
- 31: venting duct
- 32: outlet of venting duct
- 33: wastewater
- 34: handle

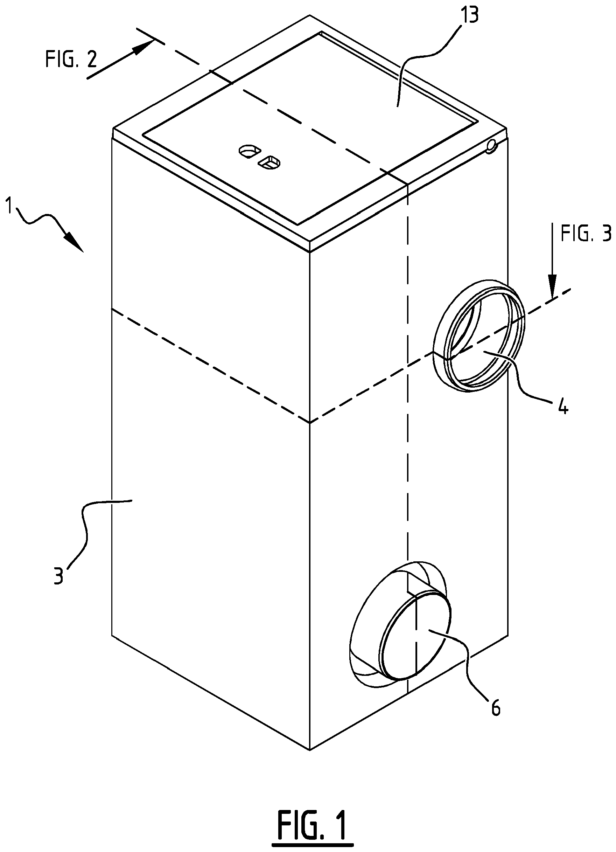

In FIG. 1, a pavement drainage well 1 for draining surface water 2 is illustrated. The pavement drainage well 1 comprises a well housing 3 with a surface water inlet 4 that is configured to receive surface water 2 from a paved surface 5, and with a wastewater outlet 6 that is configured to be connected to a sewer 7. A filter unit 8 is located within the well housing 3 between the surface water inlet 4 and the wastewater outlet 6. The filter unit 8 comprises a filter element 9 forming at least part of a flow surface 10 along which the surface water 2 flows from the surface water inlet 4 to the wastewater outlet 6. The pavement drainage well 1 further comprises a filtrate outlet 11 configured to drain the filtrate 12 collected by the filter unit 8 from the well 1.

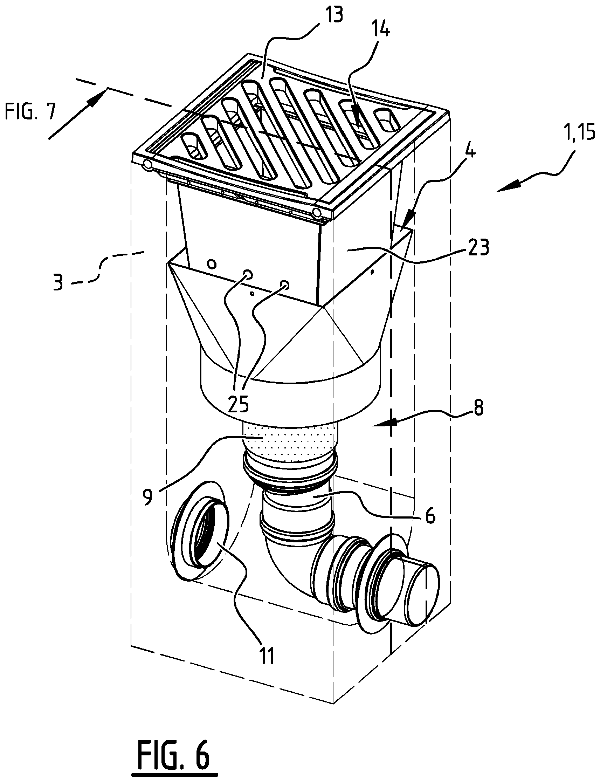

An access hatch 13 is provided at a top surface of the well 1. The access hatch 13 may be provided with openings 14 (illustrated as a grating in FIGS. 6-7), in particular when the well 1 is implemented as a storm drain 15.

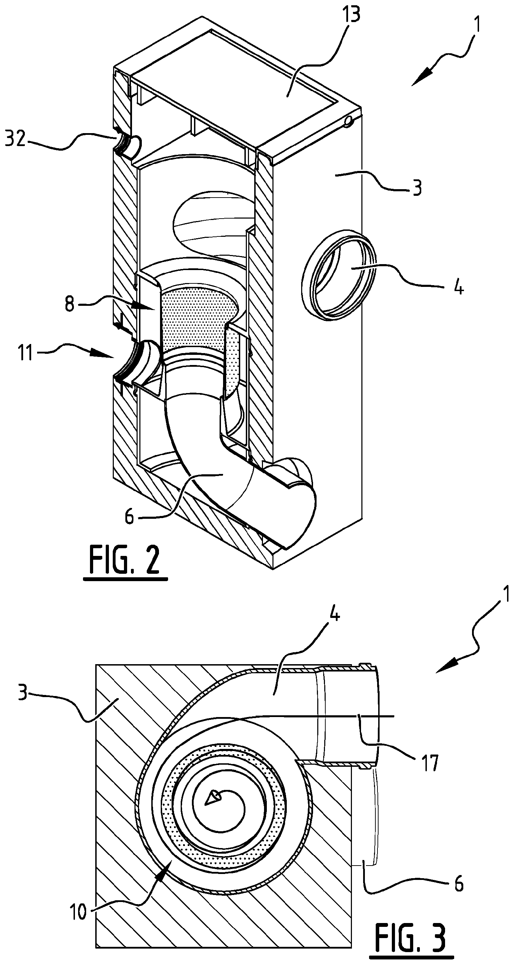

FIGS. 2 and 3 present cross-sectional views along the arrows indicated in FIG. 1.

The filter element 9 forms a channel 16 from the surface water inlet 4 to the wastewater outlet 6. Surface water 2 introduced through the surface water inlet 4 flows over the channel 16 formed by the filter element 9 to, on the one hand, the wastewater outlet 6 and, on the other hand, to filtrate outlet 11. The filter element 9 ensures separation of coarse and particulate matter (illustrated as a leaf), including contaminating substances that stick to such particulate matter, from most of the water which forms the filtrate 12.

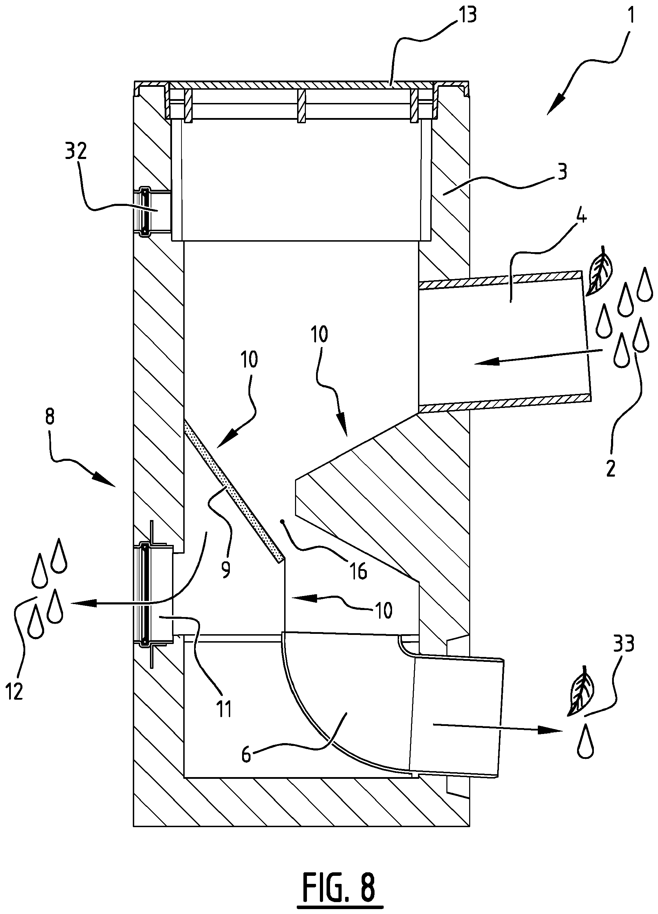

The channel 16 is illustrated with a cylindrical cross-section, though the channel 16 may have various geometric shapes connecting the surface water inlet 4 to the wastewater outlet 6. For example, in FIG. 8, the filter element 9 is shown as having a flat shape. Various constructions of the well 1 are envisioned, as long as the incoming surface water 2 is (at least partially) guided along (i.e., over) the surface of the filter element 9 towards the wastewater outlet 6. The filter element 9 and/or the channel 16 it forms, defines an interface between a continuous drainage channel connecting the surface water inlet 4 to the wastewater outlet 6 and the filtrate outlet 11.

The filter element 9 of the pavement drainage well 1 of FIG. 8 may also comprise the filter plate 18 having the filter mesh 19 and may further comprise the adhesion plate 20 with or without perforations 22.

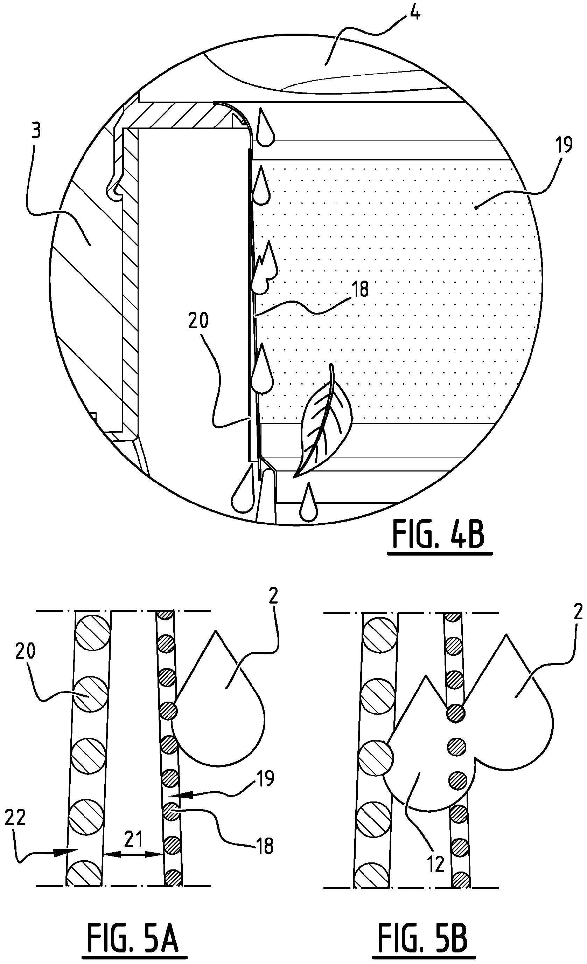

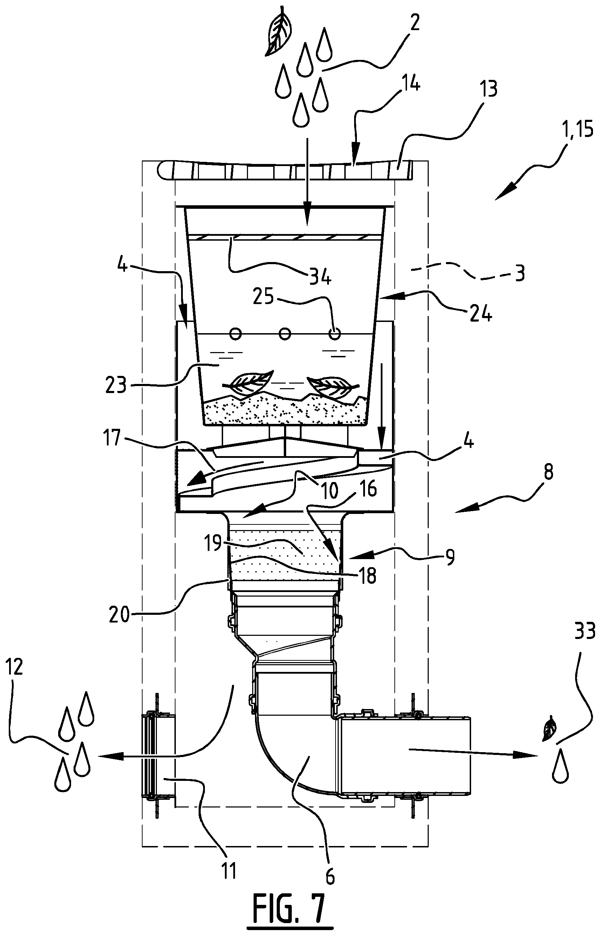

In FIG. 4B, it can be seen that the channel 16 narrows towards the wastewater outlet 6. The surface water inlet 4 is oriented relative to the channel 16 such that at least part of the surface water 2 follows a substantially helical path 17 through the channel 16. A helical path 17 is also illustrated in the well 1 of FIG. 7. The helical path 17 may be initiated by the form of the surface water inlet 4. For example, the surface water inlet 4 may be configured to direct incoming surface water 2 along a tangential path, e.g. relative to a vertical direction of the channel 16 in the well 1.

The filter element 9 comprises a filter plate 18 with a filter mesh 19. The filter plate is 18 can be made of stainless steel.

The filter element 9 also comprises an adhesion plate 20 provided behind the filter plate 18. The adhesion plate 20 is arranged behind the filter plate 18 as seen relative to the flow direction of filtrate originating from the surface water 2 through the filter element 9. A distance 21 between the filter plate 18 and the adhesion plate 20 decreases towards the surface water inlet 4. The adhesion plate 20 is illustrated with perforations 22 which serve to increase filtrate 12 throughput.

FIG. 5A and 5B illustrate the working principle of the filter element 9 comprising the filter plate 18 with its filter mesh 19 and an adhesion plate 20. Due to forces of adhesion (related to wetting), water is attracted to the surface of the filter mesh 19 and thereby passes through the filter mesh 19 and may reach the adhesion plate 20 arranged behind the filter mesh 19. Due to forces of cohesion (related to surface tension), more water is drawn towards the adhesion plate 20. As the water falls down due to gravity, an increased separation distance 21 between the filter plate 18 and the adhesion plate 20 can accommodate increasing amounts of filtrate 12. The perforations 22 in the adhesion plate 20 may further increase the capacity of the filter element 9 to withdraw filtrate or water 12 from the surface water 2 passing along the filter element 9.

FIGS. 6 and 7 illustrate a pavement drainage well 1 with integrated storm drain 15. A storm drain 15 generally comprises an overflow reservoir 23, which allows particular matter or other debris to settle. The overflow reservoir 23 may thus perform the function of a prefilter 24. The illustrated well 1 comprises an overflow reservoir 23 arranged between the surface water inlet 4 and the filter unit 8. An overflow outlet 25 of the overflow reservoir 23 provides the surface water 2 to the filter unit 8. The overflow reservoir 23 is illustrated as a bucket with openings forming overflow outlets 25. In an alternative embodiment (not illustrated), the bucket or overflow reservoir 23 can be made of a perforated sheet material, such as stainless steel, to perform a prefilter function.

The overflow reservoir or bucket 23 is provided with a handle 34 for easy removal from the well 1 for emptying of the overflow reservoir 23 and other maintenance.

The storm drain of FIG. 6 is provided with an inlet cover 13 in form of hatched inlet grate. Inlet covers or access hatches 13 are preferably made of metal such as cast iron. When the inlet cover or hatch 13 is opened, settled debris can be cleared from the overflow reservoir 23. Further, the overflow reservoir 23 may be removable arranged onto the filter unit 8, for example as illustrated.

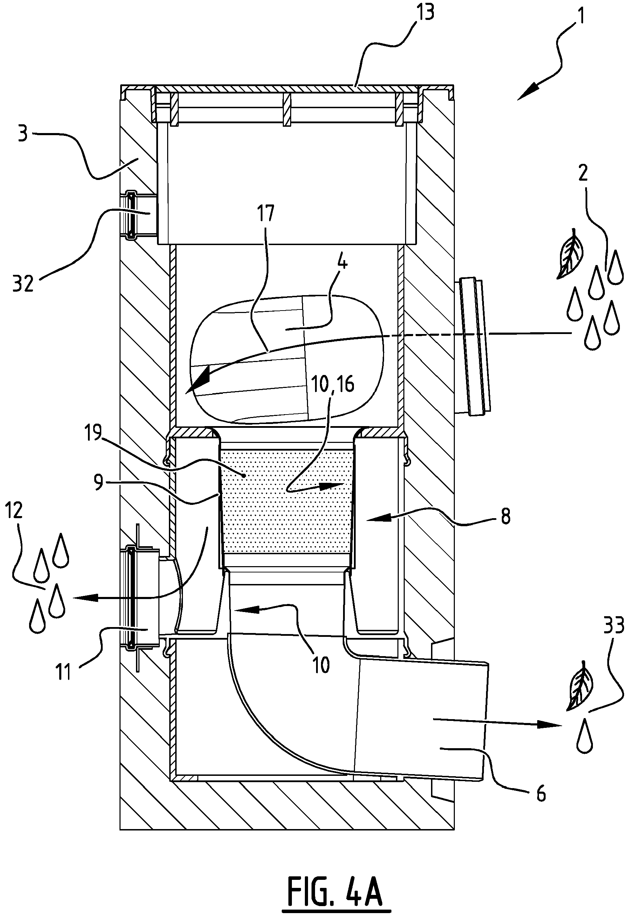

The filter unit 8 and/or the filter element 9 of the well 1 of FIG. 6 may correspond to those of the well 1 of FIG. 4A-4B.

In the illustrated embodiments, the well housing 3 is at least partially made of concrete. The filter unit 8 is mounted to the concrete of the well housing 3, preferably by partially casting the filter unit 8 into the concrete. As is particularly clear from FIGS. 4A and 7, the filter unit 8 may be arranged or cast into the concrete well housing 3, with an access hatch or inlet cover 13 arranged at the top. Prior to casting, the filter unit 8 may be modularly assembled.

As particularly clear from Fig. 4B, the filter element 9 may be removably arranged in the well 1. For example by being supported onto the surface water inlet 4 and/or the wastewater outlet 6. When the hatch 13 is opened, the filter element 9 can be removed, serviced, or replaced.

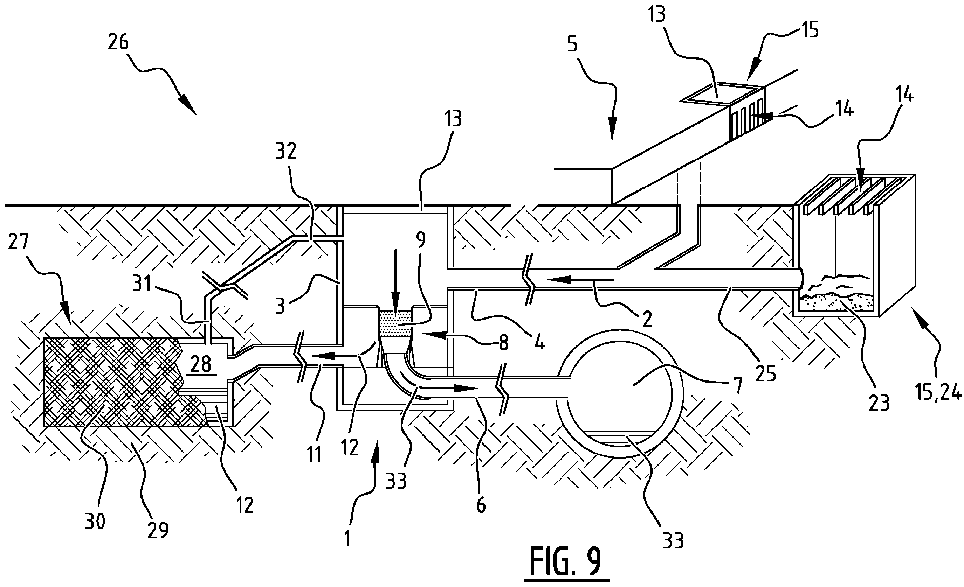

FIG. 9 illustrates how the pavement drainage well 1 can be employed in a pavement surface water infiltration system 26. The pavement surface water infiltration system 26 comprises the pavement drainage well 1 according to the present disclosure as well as an infiltration reservoir 27 connected to the filtrate outlet 11 for receiving the filtrate 12 from the filter unit 8 of the well 1.

At least part of the infiltration reservoir 27 has an open structure 28 from which water can infiltrate surrounding soil 29. The infiltration reservoir 27 can be lined with a porous material 30, such as geotextile.

The system 26 further comprises a venting duct 31 connected with the infiltration reservoir 27, for example with a top surface thereof, and the well housing 3. An outlet 31 of the venting duct at the well housing 3 is located above the surface water inlet 4.

The system 26 shown in FIG. 9 provides infiltration in the vicinity of paved surface 5. Surface water 2 is drained from the paved surface 5 into storm drains 15, which lead to the surface water inlet 4 of a pavement drainage well 1. The surface water 2 is filtered in the pavement drainage well 1 as it is guided through the filter unit 8, in particular through the filter element 9 which separates the incoming surface water 2 into filtrate 12 and wastewater 33. The filtrate 12 is guided to the infiltration reservoir 27 via the filtrate outlet 11, while the wastewater 33 is guided to a sewer 7 via the wastewater outlet 6.

The examples and/or embodiments presented above are merely of illustrative nature and are not to be construed as limiting the present disclosure or the scope of protection conferred by the appended claims in any way.

## Claims

1. Pavement drainage well (1) for draining surface water, comprising:
a well housing (3) comprising a surface water inlet (4) configured to receive surface water from a paved surface (5), and a wastewater outlet (6) configured to be connected to a sewer (7);
a filter unit (8) located within the well housing (3) between the surface water inlet (4) and the wastewater outlet (6), the filter unit (8) comprising a filter element (9) forming a channel (16) that is at least part of a continuous flow surface (10) along which the surface water is configured to flow from the surface water inlet (4) to pass along and over the filter element (9) towards the wastewater outlet (6), wherein the flow surface (10) defines a continuous drainage channel connecting the surface water inlet (4) to the wastewater outlet (6); and
a filtrate outlet (11) configured to drain the filtrate collected by the filter unit (8) from the pavement drainage well (1),
wherein the filter element (9) and/or the channel (16) formed by the filter element (9) defines an interface between the continuous drainage channel and the filtrate outlet (11), and the surface water inlet (4) is oriented relative to the channel (16) formed by the filter element (9) such that at least part of the surface water follows a substantially helical path (17) through the channel (16).

2. Pavement drainage well (1) according to claim 1, wherein the channel (16) extends from the surface water inlet (4) to the wastewater outlet (6).

3. Pavement drainage well (1) according to claim 1 or 2, wherein the channel (16) has a cylindrical cross-section and/or narrows towards the wastewater outlet (6).

4. Pavement drainage well (1) according to any of the preceding claims, wherein the filter element (9) comprises a filter plate (18) with a filter mesh (19), preferably wherein the filter plate (18) is made of stainless steel.

5. Pavement drainage well (1) according to claim 4, wherein the filter element (9) comprises an adhesion plate (20) provided behind the filter plate (18).

6. Pavement drainage well (1) according to claim 5, wherein a distance between the filter plate (18) and the adhesion plate (20) decreases towards the surface water inlet (4) and/or wherein the adhesion plate (20) is perforated.

7. Pavement drainage well (1) according to any of the preceding claims, wherein the well housing (3) is at least partially made of concrete, preferably wherein the filter unit (8) is mounted to the concrete of the well housing (3), preferably by partially casting the filter unit (8) into the concrete.

8. Pavement drainage well Well (1) according to any of the preceding claims, further comprising an overflow reservoir (23) located between the surface water inlet (4) and the filter unit (8), wherein an overflow outlet (25) of the overflow reservoir (23) provides the surface water to the filter unit (8).

9. Pavement drainage well (1) according to any of the preceding claims, wherein the surface water inlet (4) is provided with an inlet cover (13), preferably made of metal.

10. Pavement drainage well Well (1) according to any of the preceding claims, further comprising a prefilter (24) located between the surface water inlet (4) and the filter unit (8).

11. Pavement surface water infiltration system (26), comprising:
a pavement drainage well (1) according to any of the preceding claims; and
an infiltration reservoir (27) connected to the filtrate outlet (11) for receiving the filtrate from the filter unit (8).

12. Pavement surface water infiltration system (26) according to claim 11, wherein at least part of the infiltration reservoir (27) has an open structure (28), preferably wherein the infiltration reservoir (27) is lined with a porous material (30), such as geotextile.

13. Pavement surface water infiltration system (26) according to claim 11 or 12, further comprising a venting duct (31) connected with the infiltration reservoir (27) and the well housing (3), wherein an outlet (32) of the venting duct (31) at the well housing (3) is located above the surface water inlet (4).

14. Method for providing infiltration in the vicinity of a paved surface (5), comprising the steps of:
providing a pavement surface water infiltration system (26) according to any of claims 11-13; burying the infiltration reservoir (27) at a location in need of increased infiltration in the vicinity of the paved surface (5);
burying the pavement drainage well (1) in the vicinity of the paved surface (5); connecting the surface water inlet (4) of the pavement drainage well (1) to the paved surface (5); and
connecting the infiltration reservoir (27) to the filtrate outlet (11) of the pavement drainage well (1).

## Patentansprüche

1. Straßenentwässerungsschacht (1) zum Entwässern von Oberflächenwasser, umfassend:
ein Schachtgehäuse (3), umfassend einen Oberflächenwassereinlass (4), der konfiguriert ist, um Oberflächenwasser von einer befestigten Oberfläche (5) aufzunehmen, und einen Abwasserauslass (6), der konfiguriert ist, um an eine Kanalisation (7) angeschlossen zu werden;
eine Filtereinheit (8), die sich innerhalb des Schachtgehäuses (3) zwischen dem Oberflächenwassereinlass (4) und dem Abwasserauslass (6) befindet, die Filtereinheit (8) umfassend ein Filterelement (9), das einen Kanal (16) ausbildet, der mindestens Teil einer kontinuierlichen Strömungsoberfläche (10) ist, entlang derer das Oberflächenwasser konfiguriert ist, um von dem Oberflächenwassereinlass (4) entlang und über das Filterelement (9) zu dem Abwasserauslasses (6) hin zu strömen, wobei die Strömungsoberfläche (10) einen kontinuierlichen Entwässerungskanal definiert, der den Oberflächenwassereinlass (4) an den Abwasserauslass (6) anschließt; und
einen Filtratauslass (11), der konfiguriert ist, um das Filtrat, das durch die Filtereinheit (8) gesammelt wird, aus dem Straßenentwässerungsschacht (1) zu entwässern,
wobei das Filterelement (9) und/oder der Kanal (16), der durch das Filterelement (9) ausgebildet ist, eine Schnittstelle zwischen dem kontinuierlichen Entwässerungskanal und dem Filtratauslass (11) definiert, und der Oberflächenwassereinlass (4) relativ zu dem Kanal (16), der durch das Filterelement (9) ausgebildet ist, derart ausgerichtet ist, dass mindestens ein Teil des Oberflächenwassers einem im Wesentlichen spiralförmigen Pfad (17) durch den Kanal (16) folgt.

2. Straßenentwässerungsschacht (1) nach Anspruch 1, wobei sich der Kanal (16) von dem Oberflächenwassereinlass (4) zu dem Abwasserauslass (6) erstreckt.

3. Straßenentwässerungsschacht (1) nach Anspruch 1 oder 2, wobei der Kanal (16) einen zylindrischen Querschnitt aufweist und/oder sich zu dem Abwasserauslass (6) hin verengt.

4. Straßenentwässerungsschacht (1) nach einem der vorstehenden Ansprüche, wobei das Filterelement (9) eine Filterplatte (18) mit einem Filtergewebe (19) umfasst, vorzugsweise wobei die Filterplatte (18) aus rostfreiem Stahl hergestellt ist.

5. Straßenentwässerungsschacht (1) nach Anspruch 4, wobei das Filterelement (9) eine Haftplatte (20) umfasst, die hinter der Filterplatte (18) bereitgestellt ist.

6. Straßenentwässerungsschacht (1) nach Anspruch 5, wobei ein Abstand zwischen der Filterplatte (18) und der Haftplatte (20) zu dem Oberflächenwassereinlass (4) hin abnimmt und/oder wobei die Haftplatte (20) perforiert ist.

7. Straßenentwässerungsschacht (1) nach einem der vorstehenden Ansprüche, wobei das Schachtgehäuse (3) mindestens teilweise aus Beton hergestellt ist, vorzugsweise wobei die Filtereinheit (8) an dem Beton des Schachtgehäuses (3) montiert ist, vorzugsweise durch teilweises Eingießen der Filtereinheit (8) in den Beton.

8. Straßenentwässerungsschacht (1) nach einem der vorstehenden Ansprüche, ferner umfassend einen Überlaufbehälter (23), der sich zwischen dem Oberflächenwassereinlass (4) und der Filtereinheit (8) befindet, wobei ein Überlaufauslass (25) des Überlaufbehälters (23) das Oberflächenwasser an die Filtereinheit (8) bereitstellt.

9. Straßenentwässerungsschacht (1) nach einem der vorstehenden Ansprüche, wobei der Oberflächenwassereinlass (4) mit einer Einlassabdeckung (13), vorzugsweise aus Metall hergestellt, versehen ist.

10. Straßenentwässerungsschacht (1) nach einem der vorstehenden Ansprüche, ferner umfassend einen Vorfilter (24), der sich zwischen dem Oberflächenwassereinlass (4) und der Filtereinheit (8) befindet.

11. Straßenoberflächenwasser-Durchsickerungssystem (26), umfassend:
einen Straßenentwässerungsschacht (1) nach einem der vorstehenden Ansprüche; und
einen Durchsickerungsbehälter (27), der an den Filtratauslass (11) zum Aufnehmen des Filtrats von der Filtereinheit (8), angeschlossen ist.

12. Straßenoberflächenwasser-Durchsickerungssystem (26) nach Anspruch 11, wobei mindestens ein Teil des Durchsickerungsbehälters (27) eine offene Struktur (28) aufweist, vorzugsweise wobei der Durchsickerungsbehälter (27) mit einem porösen Material (30), wie Geotextil, ausgekleidet ist.

13. Straßenoberflächenwasser-Durchsickerungssystem (26) nach Anspruch 11 oder 12, ferner umfassend einen Entlüftungskanal (31), der an den Durchsickerungsbehälter (27) und das Schachtgehäuse (3) angeschlossen ist, wobei sich ein Auslass (32) des Entlüftungskanals (31) an dem Schachtgehäuse (3) über dem Oberflächenwassereinlass (4) befindet.

14. Verfahren zum Bereitstellen einer Durchsickerung in der Nähe einer befestigten Oberfläche (5), umfassend die Schritte:
Bereitstellen eines Straßenoberflächenwasser-Durchsickerungssystems (26) nach einem der Ansprüche 11 bis 13;
Vergraben des Durchsickerungsbehälters (27) an einer Stelle mit erhöhtem Durchsickerungsbedarf in der Nähe der befestigten Oberfläche (5);
Vergraben des Straßenentwässerungsschachts (1) in der Nähe der befestigten Oberfläche (5);
Anschließen des Oberflächenwassereinlasses (4) des Straßenentwässerungsschachts (1) an die befestigte Oberfläche (5); und
Anschließen des Durchsickerungsbehälters (27) an den Filtratauslass (11) des Straßenentwässerungsschachts (1).

## Revendications

1. Puits de drainage de chaussée (1) destiné à drainer de l'eau de surface, comprenant :
un corps de puits (3) comprenant une entrée d'eau de surface (4) conçue pour recevoir de l'eau de surface depuis une surface pavée (5), et une sortie d'eau usée (6) conçue pour être raccordée à un égout (7) ;
une unité de filtre (8) placée au sein du corps de puits (3) entre l'entrée d'eau de surface (4) et la sortie d'eau usée (6), l'unité de filtre (8) comprenant un élément de filtre (9) formant un canal (16) qui fait au moins partie d'une surface d'écoulement continue (10) le long de laquelle l'eau de surface est conçue pour s'écouler depuis l'entrée d'eau de surface (4) pour passer le long et au-dessus de l'élément de filtre (9) vers la sortie d'eau usée (6), dans lequel la surface d'écoulement (10) définit un canal de drainage continu raccordant l'entrée d'eau de surface (4) à la sortie d'eau usée (6) ; et
une sortie de filtrat (11) conçue pour drainer le filtrat collecté par l'unité de filtre (8) depuis le puits de drainage de chaussée (1),
dans lequel l'élément de filtre (9) et/ou le canal (16) formé par l'élément de filtre (9) définit une interface entre le canal de drainage continu et la sortie de filtrat (11), et l'entrée d'eau de surface (4) est orientée par rapport au canal (16) formé par l'élément de filtre (9) de telle sorte qu'au moins une partie de l'eau de surface suit une trajectoire sensiblement hélicoïdale (17) à travers le canal (16).

2. Puits de drainage de chaussée (1) selon la revendication 1, dans lequel le canal (16) s'étend depuis l'entrée d'eau de surface (4) jusqu'à la sortie d'eau usée (6).

3. Puits de drainage de chaussée (1) selon la revendication 1 ou 2, dans lequel le canal (16) a une section transversale cylindrique et/ou se rétrécit vers la sortie d'eau usée (6).

4. Puits de drainage de chaussée (1) selon l'une quelconque des revendications précédentes, dans lequel l'élément de filtre (9) comprend une plaque de filtre (18) avec une maille de filtre (19), de préférence dans lequel la plaque de filtre (18) est constituée d'acier inoxydable.

5. Puits de drainage de chaussée (1) selon la revendication 4, dans lequel l'élément de filtre (9) comprend une plaque d'adhérence (20) fournie derrière la plaque de filtre (18).

6. Puits de drainage de chaussée (1) selon la revendication 5, dans lequel une distance entre la plaque de filtre (18) et la plaque d'adhérence (20) diminue vers l'entrée d'eau de surface (4) et/ou dans lequel la plaque d'adhérence (20) est perforée.

7. Puits de drainage de chaussée (1) selon l'une quelconque des revendications précédentes, dans lequel le corps de puits (3) est au moins partiellement constitué de béton, de préférence dans lequel l'unité de filtre (8) est montée sur le béton du corps de puits (3), de préférence par coulage partiel de l'unité de filtre (8) dans le béton.

8. Puits de drainage de chaussée (1) selon l'une quelconque des revendications précédentes, comprenant en outre un réservoir de trop-plein (23) placé entre l'entrée d'eau de surface (4) et l'unité de filtre (8), dans lequel une sortie de trop-plein (25) du réservoir de trop-plein (23) fournit l'eau de surface à l'unité de filtre (8).

9. Puits de drainage de chaussée (1) selon l'une quelconque des revendications précédentes, dans lequel l'entrée d'eau de surface (4) est pourvue d'un couvercle d'entrée (13), de préférence constitué de métal.

10. Puits de drainage de chaussée (1) selon l'une quelconque des revendications précédentes, comprenant en outre un préfiltre (24) placé entre l'entrée d'eau de surface (4) et l'unité de filtre (8).

11. Système d'infiltration d'eau de surface de chaussée (26), comprenant :
un puits de drainage de chaussée (1) selon l'une quelconque des revendications précédentes ; et
un réservoir d'infiltration (27) raccordé à la sortie de filtrat (11) pour la réception du filtrat depuis l'unité de filtre (8).

12. Système d'infiltration d'eau de surface de chaussée (26) selon la revendication 11, dans lequel au moins une partie du réservoir d'infiltration (27) a une structure ouverte (28), de préférence dans lequel le réservoir d'infiltration (27) est revêtu d'un matériau poreux (30), tel qu'un géotextile.

13. Système d'infiltration d'eau de surface de chaussée (26) selon la revendication 11 ou 12, comprenant en outre un conduit d'aération (31) raccordé avec le réservoir d'infiltration (27) et le corps de puits (3), dans lequel une sortie (32) du conduit d'aération (31) au niveau du corps de puits (3) est placée au-dessus de l'entrée d'eau de surface (4).

14. Procédé destiné à fournir une infiltration à proximité d'une surface pavée (5), comprenant les étapes consistant à :
fournir un système d'infiltration d'eau de surface de chaussée (26) selon l'une quelconque des revendications 11 à 13 ;
enterrer le réservoir d'infiltration (27) à un emplacement nécessitant une augmentation d'infiltration à proximité de la surface pavée (5) ;
enterrer le puits de drainage de chaussée (1) à proximité de la surface pavée (5) ;
raccorder l'entrée d'eau de surface (4) du puits de drainage de chaussée (1) à la surface pavée (5) ; et
raccorder le réservoir d'infiltration (27) à la sortie de filtrat (11) du puits de drainage de chaussée (1).
